## Europäisches Patentamt

## European Patent Office

## Office européen des brevets

(19)

(11) Veröffentlichungsnummer: **0 036 542**
**B1**

# EUROPÄISCHE PATENTSCHRIFT

(45) Veröffentlichungstag der Patentschrift:
04.05.83

(21) Anmeldenummer: 81101697.1

(22) Anmeldetag: 09.03.81

(51) Int. Cl.³: **C 09 K 3/10,** C 10 M 3/22,
C 08 L 71/02, C 08 G 65/28

(54) **Dichtungs- und Schmiermittel für Mittel- und Hochdruckautoklaven.**

(30) Priorität: **22.03.80 DE 3011083**

(43) Veröffentlichungstag der Anmeldung:
**30.09.81 Patentblatt 81/39**

(45) Bekanntmachung des Hinweises auf die Patenterteilung:
**04.05.83 Patentblatt 83/18**

(84) Benannte Vertragsstaaten:
**BE DE FR GB IT**

(56) Entgegenhaltungen:
**DE-A-1 468 812**
**DE-A-2 459 900**
**DE-B-1 543 305**
**FR-A-1 286 983**
**GB-A-1 017 951**
**GB-A-1 504 432**

(73) Patentinhaber: **BAYER AG, Zentralbereich Patente,
Marken und Lizenzen, D-5090 Leverkusen 1, Bayerwerk
(DE)**

(72) Erfinder: **Köhler, Armin, Dr., Lönsstrasse 3,
D-4047 Dormagen (DE)**
Erfinder: **Schuster, Herbert, Dr., Hahnenweg 2,
D-5000 Köln 80 (DE)**
Erfinder: **Renner, Rudi, Dr., Eibenweg 3,
D-5060 Bergisch-Gladbach 2 (DE)**

BUNDESDRUCKEREI BERLIN

## Dichtungs- und Schmiermittel für Mittel- und Hochdruckautoklaven

Die Erfindung betrifft ein Polyetherpolyole enthaltendes Dichtungs- und Schmiermittel für Mittel- und Hochdruckautoklaven.

Es ist bekannt, daß bei chemischen Reaktionen, die unter Druck im Rührautoklaven durchgeführt werden, wie die Polymerisation von Ethylen oder die Copolymerisation von Ethylen mit Vinylacetat, ein wesentliches Problem die Dichtung zwischen dem sich bewegenden Rührer und dem fest installierten Autoklavenmantel darstellt.

Weiterhin ist es von Bedeutung, daß der Rührautoklav nicht nur abgedichtet wird, sondern daß zusätzlich die durch den sich bewegenden Rührer hervorgerufene Reibung, welche zu einem hohen Materialverschleiß führt, vermindert wird.

Deshalb enthält die Führung des Rührers im Autoklaven, die sogenannte Stopfbuchse, zur Abdichtung des im Autoklaven unter Druck stehenden Mediums mehrere Dichtungsringe aus nahtlosem Weicheisen, die mehr oder weniger fest angezogen werden müssen. Zur Verminderung der Reibung des sich bewegenden Autoklavenrührers und zur zusätzlichen Abdichtung wird ein Dichtungsmittel, das auch gleichzeitig ein gutes Schmiermittel sein muß, zwischen Rührer und Stopfbuchse gepreßt. Dabei läßt es sich nicht vermeiden, daß ein Teil des Dichtungs- und Schmiermittels in das Autoklaveninnere gelangt und ein weiterer Teil oben aus der Stopfbuchse austritt. Die Qualität des Dichtungs- und Schmiermittels läßt sich daran beurteilen, ob die Weicheisenringe möglichst wenig nachgezogen werden müssen, was einen geringen Verschleiß und damit eine gute Schmierwirkung bedeutet, ob möglichst wenig des Dichtungs- und Schmiermittels in den Autoklaven hineinfließt bzw. oben aus der Stopfbuchse austritt und damit verloren geht, was für die Wirtschaftlichkeit des Dichtungs- und Schmiermittels spricht, und ob das Dichtungs- und Schmiermittel des Rührautoklaven genügend abdichtet.

Da, wie oben geschildert, das Dichtungs- und Schmiermittel auch in das Autoklaveninnere gelangen kann, ist es von besonderer Bedeutung, daß das Dichtungs- und Schmiermittel sich inert verhält, d. h. es darf die im Autoklaven stattfindende Reaktion nicht stören oder das Produkt verfärben oder sonstige Produktbeeinflussungen ausüben.

Es hat sich jedoch gezeigt, daß besonders bei Reaktionen, die empfindlich auf Fremdsubstanzen reagieren, wie die Polymerisation von Ethylen mit Vinylacetat unter Druck, sich die bekannten mineralischen Öle und sonstigen gängigen Schmiermittel, wie Energol®, Mobil®-Öl oder Glycerin nicht verwenden lassen, da diese die Reaktion im Autoklaven erheblich stören und/oder das Produkt verfärben.

Es wurde nun die Verwendung von Polyetherpolyolen mit einer mittleren OH-Funktionalität von 5,0 bis 7,0 und einer mittleren OH-Zahl von 250 bis 500, die durch Umsetzung eines Gemisches aus Saccharose und mindestens einem weiteren Startermolekül, ausgewählt aus

a) mehrwertigen Alkoholen einer unter 8 liegenden OH-Funktionalität,
b) mindestens zwei an Aminostickstoff gebundene Wasserstoffatome aufweisenden Mono- oder Polyaminen,
c) Wasser,

mit Ethylen- und/oder Propylenoxid hergestellt werden, als Dichtungs- und Schmiermittel gefunden.

Bevorzugt ist ein solches Dichtungs- und Schmiermittel, das Polyetherpolyole mit einer mittleren OH-Funktionalität von 5,5 bis 6 und einer OH-Zahl von 350 bis 400 enthält.

Das Polyetherpolyole enthaltende Dichtungs- und Schmiermittel läßt sich besonders vorteilhaft für die Dichtung und Schmierung von Mittel- und Hochdruckautoklaven verwenden.

Zum Beispiel läßt sich das erfindungsgemäße Dichtungs- und Schmiermittel bei der Polymerisation von Ethylen mit Vinylacetat, die bei Drücken von etwa 100 bis etwa 500 bar in einem Druckautoklaven durchgeführt wird, und die besonders empfindlich auf Fremdsubstanzen reagiert, verwenden. Das erfindungsgemäße Dichtungs- und Schmiermittel besitzt dabei den Vorteil, daß es die Polymerisation nicht stört und auch keinen Einfluß auf die Produktqualität hat.

Eine Verwendung des erfindungsgemäßen Dichtungs- und Schmiermittels ist auch bei anderen Druckreaktionen, die in einem Mittel- oder Hochdruckautoklaven durchgeführt werden, möglich, sofern sich das erfindungsgemäße Dichtungs- und Schmiermittel inert gegenüber der im Autoklaven stattfindenden Reaktion verhält.

Das erfindungsgemäße Dichtungs- und Schmiermittel kann, wie beisielsweise in der DE-A-2 241 242 beschrieben, hergestellt werden, indem man zunächst bei 20 bis 110°C ein Gemisch herstellt, das

a) 100 Gew.-Teile Saccharose,
b) 2 bis 5 Gew.-Teile Wasser,
c) 2 bis 20 Gew.-Teile eines mehrwertigen Alkohols einer unter 8 liegenden OH-Funktionalität und/oder eines mindestens zwei an Aminostickstoff gebundene Wasserstoffatome aufweisendes Mono- oder Polyamins,
d) 40 bis 150 Gew.-Teile eines aromatischen Kohlenwasserstoff-Lösungsmittels und
e) 1 bis 5 Gew.-Teile eines Alkalihydroxids

enthält und das Gemisch anschließend bei 85 bis 130°C bei Drücken von 0,3 bis 4,0 bar mit Ethylen-und/oder Propylenoxid zur Reaktion bringt.

Als mehrwertige Alkohole einer unter 8 liegenden OH-Funktionalität oder als mindestens zwei an Aminostickstoff gebundene Wasserstoffatome aufweisende Mono- oder Polyamine seien genannt: Ethylenglykol, Propylenglykol, Butandiol-1,4, Diethylenglykol, Dipropylenglykol, Trimethylolpropan, Glycerin, Sorbit, Mannit, Mono-, Di- und Triethanolamin, Mono-, Di- und Triisopropanolamin, N-Alkylalkanolamine, wie N-Methyl-diethanolamin und N-Ethyl-di-ethanolamin, niederaliphatische Monoalkylamine, Cycloalkylamine, Alkylendiamine, wie Ethylendiamin und Polyalkylenpolyamine, wie Diethylendiamin und Triethylentetramin.

Als aromatische Kohlenwasserstoff-Lösungsmittel können Benzol, Toluol, Ethylbenzol, Xylole und/oder Chlorbenzol, bevorzugt Toluol, bei der Herstellung des erfindungsgemäßen Dichtungs- und Schmiermittels eingesetzt werden.

Die Viskosität der erfindungsgemäßen Dichtungs- und Schmiermittel beträgt 3 bis 22 Pa s, bevorzugt 6 bis 20 Pa s, bei 25° C.

Die Viskosität der erfindungsgemäßen Dichtungs- und Schmiermittel kann vor allem durch die Variation der Hydroxylzahl geändert und dem jeweiligen Verwendungszweck angepaßt werden.

Das Molekulargewicht der erfindungsgemäßen Dichtungs- und Schmiermittel beträgt 600 bis 12 000, vorzugsweise 700 bis 2000.

Das erfindungsgemäße Dichtungs- und Schmiermittel wird, wie erwähnt, vorteilhaft für die Dichtung und Schmierung von Mittel- und Hochdruckrührautoklaven eingesetzt.

Besonders vorteilhaft ist der Einsatz bei Reaktionen im Autoklaven, die bei Drücken von 100 bis 500 bar, bevorzugt bei 120 bis 400 bar, und Temperaturen von 50 bis 140° C, bevorzugt bei 60 bis 120° C, durchgeführt werden.

Die besonderen Vorteile der erfindungsgemäßen Dichtungs- und Schmiermittel sind der geringe Verbrauch, der zusammen mit den geringen Herstellungskosten für die Wirtschaftlichkeit des erfindungsgemäßen Dichtungs- und Schmiermittels spricht sowie die sehr gute Schmierfähigkeit, die zu einem niedrigen Verschleiß und langer Lebensdauer der empfindlichen Autoklavenstopfbuchsen führt.

## Beispiel 1

In einem Hochdruckautoklaven werden Ethylen und Vinylacetat bei 350 bar und 80° C polymerisiert. Die Drehzahl des Autoklavenrührers beträgt 80 U/min.

Als Dichtungs- und Schmiermittel der Stopfbuchse wird ein Polyetherpolyol mit einer mittleren OH-Funktionalität von 5,5 und eine OH-Zahl von 390 bei einem Druck von 399 bar in die Stopfbuchse gepreßt.

Der Verbrauch des Dichtungs- und Schmiermittels beträgt 1 kg in 24 Stunden. Die Dichtungsringe der Stopfbuchse mußten im Monat viermal nachgezogen werden.

Erst nach 25 Monaten waren die Dichtungsringe verschlissen und mußten ausgewechselt werden.

## Vergleichsbeispiel

Bei der Polymerisation von Ethylen und Vinylacetat entsprechend Beispiel 1 wird als Dichtungs- und Schmiermittel der Stopfbuchse Hexantriol (Viskosität: 2,8 Pa s bei 25° C) eingesetzt.

Der Verbrauch des Dichtungs- und Schmiermittels beträgt 2,8 bis 3,0 kg in 24 Stunden.

Die Dichtungsringe der Stopfenbuchse mußten zweimal am Tag nachgezogen werden. Nach 6 Monaten waren die Dichtungsringe verschlissen und mußten ausgewechselt werden.

## Anmerkung

Die OH-Zahl wurde wie üblich erhalten durch Acylierung des Polyethers mit überschüssigem Phthalsäureanhydrid in Pyridin.

Die mittlere OH-Funktionalität entspricht der mittleren Funktionalität des bei der Alkoxylierungsreaktion eingesetzten Ausgangsgemisches.

## Patentansprüche

1. Verwendung von Polyetherpolyolen mit einer mittleren OH-Funktionalität von 5,0 bis 7,0 und einer mittleren OH-Zahl von 250 bis 500, die durch Umsetzung eines Gemisches aus Saccharose und mindestens einem weiteren Startermolekül, ausgewählt aus

a)  mehrwertigen Alkoholen einer unter 8 liegenden OH-Funktionalität,

b)  mindestens zwei an Aminostickstoff gebundene Wasserstoffatome aufweisenden Mono- oder Polyaminen,

c)  Wasser,

mit Ethylen- und/oder Propylenoxid hergestellt werden, als Dichtungs- und Schmiermittel.

2. Verwendung von Polyetherpolyolen gemäß Anspruch 1, als Dichtungs- und Schmiermittel für Mittel- und Hochdruckautoklaven.

## Claims

1. Use of polyether-polyols having an average OH-functionality of 5.0 to 7.0 and an average OH number of 250 to 500, which are prepared by reacting a mixture of sucrose and at least one other starting molecule chosen from the group comprising

a) polyhydric alcohols with an OH-functionality of less than 8,
b) monoamines or polyamines which contain at least 2 hydrogen atoms bonded to amino nitrogen and
c) water,

with ethylene oxide and/or propylene oxide, as a sealing agent and lubricant.

2. Use of polyether-polyols according to Claim 1 as a sealing agent and lubricant for medium-pressure and high-pressure autoclaves.

**Revendications**

1. Utilisation de polyétherpolyols ayant une fonctionnalité OH moyenne de 5,0 à 7,0 et un indice OH moyen de 250 à 500, qui sont préparés par réaction d'un mélange de saccharose et d'au moins une autre molécule initiatrice choisie parmi

a) des alcools polyvalents ayant une fonctionnalité OH inférieure à 8,
b) des mono- ou polyamines présentant au moins deux atomes d'hydrogène liés à l'azote amino,
c) de l'eau,

avec de l'oxyde d'éthylène et/ou de propylène, comme agents d'étanchement et de lubrification.

2. Utilisation de polyétherpolyols selon la revendication 1 comme agents d'étanchement et de lubrification pour autoclaves à moyenne et haute tension.